# EUROPEAN PATENT SPECIFICATION

(11) **EP 3 327 426 B1**
(45) Date of publication and mention of the grant of the patent: **12.02.2020**
(21) Application number: 16200599.5
(22) Date of filing: 24.11.2016
(51) Int. Cl.: G01N 21/64, G01N 15/14, B01L 3/00

(54) **DEVICE FOR BEAMING OF LIGHT**
VORRICHTUNG ZUR BÜNDELUNG VON LICHT
DISPOSITIF POUR CONCENTRER LA LUMIÈRE

(43) Date of publication of application: 30.05.2018
(73) Proprietor: Universität Siegen, 57076 Siegen (DE)
(72) Inventor: Elmitwalli, Hossam, 57072 Siegen (DE); Agio, Mario, 570724 Siegen (DE)
(74) Representative: Michalski Hüttermann & Partner Patentanwälte mbB

(56) References cited:
- WO-A1-2016/166130
- CN-A- 104 101 588
- US-A- 4 348 107
- US-A1- 2006 078 472
- US-A1- 2006 231 781
- US-A1- 2009 140 168
- US-A1- 2011 008 767
- US-A1- 2012 281 216

## Description

The present invention relates to a device for beaming of light emitted by light sources. More in detail, the present invention relates to a device with an improved antenna configuration of a planar optical antenna which allows beaming light emitted from various light sources, including light-emitting devices (LEDs), fluorescent markers and single-photon sources.

Light emission and light absorption are two basic processes at the core of many important applications, such as lighting, sensing and telecom. Despite the enormous progress, designing, manufacturing and testing, nanophotonics concepts that interface tiny sensing volumes to low NA (Numerical Aperture) collection optics (e.g. optical fibers), still require a substantial research effort.

There have been several interesting proposals to improve the collection efficiency of nanoscale light emitters, although only recently the attention has moved to concepts inherited from antenna theory. One of the most exciting advances in nano-optics has been the concept, design and application of optical antennas, or nano-antennas, which represent the most sophisticated tool to enhance and direct light emission from a nanoscale source. The amount of research activity on optical antennas has grown very rapidly in the last few years, and currently spans a broad range of areas, including optics, physics, chemistry, electrical engineering, biology, and medicine, to cite a few.

In the research to achieve the above-mentioned object, the goal of the inventors has been the design, manufacture and experimental investigation of optical antennas that are able to channel molecular fluorescence into a narrow radiation cone. This was thought in order to allow efficient collection by a fibre probe placed in the far field, hence opening the pathway to single-molecule detection with low-NA optics. Optical antennas offer great flexibility in engineering the radiation pattern. From the prior art devices for beaming and collection of light emitted by light sources with a planar structure that beams the emission of single molecules are known.

CN 104 101 588 A discloses an integrated seawater chlorophyll microfluidic chip sensor capable of enhancing the anti-interference ability and improving the fluorescence detection efficiency adopts the technical scheme that the integrated seawater chlorophyll microfluidic chip sensor is characterized by consisting of a Si-PIN detector (1), a 6H-SiC/TTO/SiO2 layer (3), a reflecting and welding layer (4), an LED chip (5), a glass plate (6), a PDMS microfluidic channel (7) and a coated reflector (8), wherein the Si-PIN detector (1), the 6H-SiC/ITO/SiO2 layer (3), the reflecting and welding layer (4), the LED chip (5), the glass plate (6), the PDMS microfluidic channel (7) and the coated reflector (8) are sequentially connected from bottom to top. The invention also discloses a method for manufacturing integrated seawater chlorophyll microfluidic chip sensor.

US 2006/231781 A1 discloses a radiation image information detecting panel. A laminate comprises a stimulable phosphor layer, which is capable of storing radiation image information, and which is capable of emitting light of an intensity proportional to the radiation image information when being exposed to secondary stimulating rays, a response speed converting fluorescent substance layer, which is capable of converting the light emitted by the stimulable phosphor layer into light having a life time longer than a light emission life time of the light emitted by the stimulable phosphor layer, and a photo-conductor layer, which is capable of exhibiting electrical conductivity when being exposed to the light obtained from the conversion performed by the response speed converting fluorescent substance layer. The laminate and an electroluminescent layer, which is capable of emitting the secondary stimulating rays with voltage application, are overlaid one upon the other and combined with each other into an integral body.

WO 2016/166130 for example discloses a device constituted by a planar optical antenna which allows to beam and collect light emitted from various light sources. This device relies on the concept of an optical Yagi-Uda antenna, where reflector and director are implemented using thin metal films. A dipole emitter positioned a distance *d₁* away from a metallic layer, named reflector, induces an image dipole. To obtain further directionality a thin metallic layer in the radiation direction, named director, at a distance *d₂* away from the dipole is positioned. However, the efficiency of such devices could still be improved. In particular, the excitation of surface plasmon polaritons (SPPs) at metal-dielectric interfaces represents a major loss channel, which limits the outcoupling efficiency.

Therefore, the object of the present invention is to provide a device for beaming of light emitted by a light source with an enhanced antenna configuration of a planar optical antenna to improve outcoupling efficiency and directionality.

This object is addressed by the subject matter of claim 1. Preferred embodiments are described in the sub claims.

According to the disclosure a device for beaming of light emitted by a light source, the device comprising a reflector layer and a director layer, wherein a dipole emitter or an absorber is positioned at a distance d₁ away from the reflector layer, wherein the director layer is positioned in the radiation direction of the dipole emitter or in the absorption direction of the absorber, respectively, wherein the director layer is positioned at a distance d₂ away from the dipole emitter or the absorber, respectively, between a medium hosting the dipole emitter or the absorber, respectively, together with a collection medium, characterized in that between the reflector layer and the host medium a first intermediate layer is provided and between the host medium and the director layer a second intermediate layer is provided.

By including intermediate layers to space the host medium apart from the reflector or director, respectively, the excitation of SPP modes can be suppressed. The suppression of the excitation of the SPP modes leads directly to an increase in the outcoupling efficiency and an improved directionality. Not only dipole emitters but also absorbers for the collection of light can be placed in the host medium. When one or more absorbers are placed in the host medium light sources emitting at wavelength λ are corresponding to the one or more of the absorbers.

Advantageously, *d₁* is chosen within the range *λ*/(6*n*) ≤ *d₁* ≤ *λ*/(4*n*), where λ is the emission or absorption wavelength and *n* is the effective refractive index of medium composed by the host and the first intermediate layer. It has been found that an especially preferred working distance for the dipole emitter or absorber from the director layer is in the range *λ*/(6*n*) ≤ *d₂* ≤ *λ*/(4*n*), where now *n* is the effective refractive index of the medium composed by the host and the second intermediate layer.

According to one preferred embodiment of the invention the refractive indices of the first intermediate layer and second intermediate layer are both smaller than the refractive index of the host medium. The inclusion of two intermediate layers with a refractive index smaller than the refractive index of the host medium can significantly suppress the coupling to SPP modes, which are responsible for limitation on the outcoupling efficiency. The refractive index of the first intermediate layer and the refractive index of the second intermediate layer can be but do not have to be equal to each other. Moreover, these layers can be composite media or multilayer structures as long as their effective refractive index is smaller than that of the host medium. The host medium and the collection medium can also be composite media or multilayer structures.

According to another preferred embodiment of the invention a top layer is provided between the director layer and the collection medium. The additional top layer may help to further improve the outcoupling efficiency by suppressing the role of SPP in the director and the directionality of the device by narrowing the emission pattern. The top layer plays the role of an integrated flat lens and of the intermediate layer. Therefore the top layer is able to steer an optical ray by a large amount in order to convert a wide radiation pattern into a narrow cone and further suppresses the role of SPP in the director. For example a radiation pattern with a narrow cone is more favourable for coupling light to an optical system with circular symmetry, such as an optical fibre. Moreover, the top can be composite media or multilayer structures as long as their effective refractive index is smaller than that of the collection medium.

Preferably the refractive index of the top layer is smaller than the refractive index of the collection medium. A further improvement in the outcoupling efficiency and in the directionality, with an even narrower radiation pattern, can be attained by the smaller refractive index of the top layer compared to refractive index of the collection medium.

Preferably the thickness of the first intermediate layer is chosen in the range from *λ*/(50*n*) - corresponding to about 10 nm for *n* = 1.5 and λ = 738 nm - to *λ*/(*5n*) - corresponding to about 100 nm for *n* = 1.5 and λ = 738 nm- preferably from λ/(25*n*) - corresponding to about 20 nm for *n* = 1.5 and λ = 738 nm - to *λ*/(6*n*) - corresponding to about 80 nm for *n =* 1.5 and λ = 738 nm- and more preferably from λ/(15*n*) - corresponding to about 30 nm for *n* = 1.5 and λ = 738 nm - to λ/(10*n*) - corresponding to about 50 nm nm for *n* = 1.5 and λ = 738 nm - where *n* is the effective refractive index of the first intermediate layer. Further enhancements can be achieved with judicious choice of the thickness of the first intermediate layer.

Preferably the thickness of the second intermediate layer thickness is chosen in the range from λ/(15*n*) - corresponding to about 30 nm for *n* = 1.5 and λ = 738 nm - to *λ*/(4*n*) - corresponding to about 120 nm for *n* = 1.5 and λ = 738 nm - preferably from λ/(12*n*) - corresponding to about 40 nm for *n* = 1.5 and λ = 738 nm - to *λ*/(*5n*) - corresponding to about 100 nm for *n* = 1.5 and λ = 738 nm - and more preferably from λ/(10*n*) - corresponding to about 50 nm for *n =* 1.5 and λ = 738 nm - to *λ*/(7*n*) - corresponding to about 70 nm for *n* = 1.5 and λ = 738 nm - where *n* is the effective refractive index of the second intermediate layer. Further enhancements can be achieved with judicious choice of the thickness of the second intermediate layer.

Preferably the thickness of the host medium is chosen in the range from λ/(50*n*) - corresponding to about 10 nm for *n* = 1.5 and λ = 738 nm - to *λ*/(4*n*) - corresponding to about 120 nm for *n* = 1.5 and λ = 738 nm - preferably from λ/(25*n*) - corresponding to about 20 nm for *n* = 1.5 and λ = 738 nm - to λ/(6*n*) - corresponding to about 80 nm for *n* = 1.5 and λ = 738 nm - and more preferably from λ/(15*n*) - corresponding to about 30 nm for *n* = 1.5 and λ = 738 nm - to *λ*/(10*n*) - corresponding to about 50 nm for *n* = 1.5 and λ = 738 nm - where *n* is the effective refractive index of the host layer. Further enhancements can be achieved with judicious choice of the thickness of the host layer.

According to one preferred embodiment of the invention the host medium is made from diamond or GaAs. Further enhancements are can be achieved with judicious choice of the material for the host medium.

According to another preferred embodiment of the invention at least one out of the reflector layer or director layer is made out from aluminium, copper, silver, gold or a combination of thereof.

According to one preferred embodiment of the invention at least one out of the first intermediate layer or the second intermediate layer is made out from silica, ITO (indium tin oxide) or is an air gap.

According to another aspect of the invention the top layer is made from silica aerogel or is an air gap.

According to one aspect of the invention the collection medium is made from glass.

These and other aspects of the invention will be apparent from and elucidated with reference to the embodiments described hereinafter.

In the drawings:
- Fig. 1: shows a cross-sectional view of a layer structure of an embodiment of the present invention; and
- Fig. 2: shows a cross-sectional view of a layer structure of another preferred embodiment of the present invention.

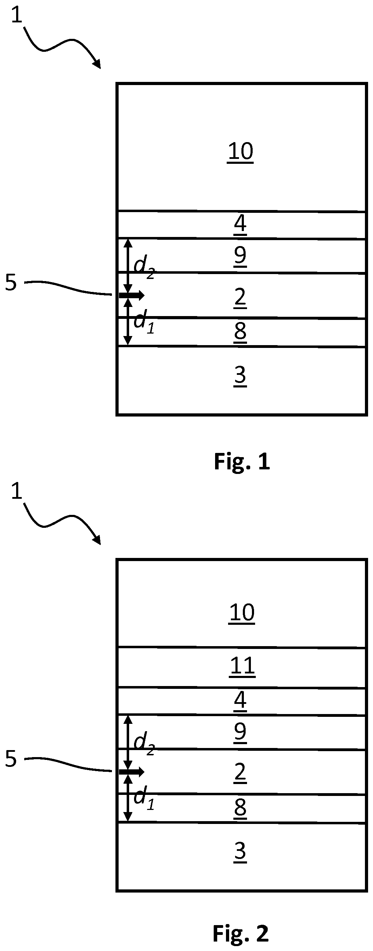

Fig. 1 shows a cross-sectional view of a layer structure 1 in accordance with a preferred embodiment of the present invention. A dipole emitter 5 is positioned a distance *d₁* away from a reflector layer 3 in an host medium 2. The dipole emitter 5 induces an image dipole. When the two dipoles radiate with an appropriate phase delay, they give rise to a beaming effect in one direction.

Further directionality is obtained by positioning a director layer 4 in the radiation direction at a distance *d₂* away from the dipole emitter 5. A horizontal arrow indicates the Hertzian dipole in the host medium 2 placed at a distance *d*₁ and *d*₂ from reflector layer 3 and director layer 4, respectively. A first intermediate layer 8 contiguous to the reflector layer 3 and a second intermediate layer 9 contiguous to the director layer 4 space the host medium 2 apart from the reflector layer 3 and director layer 4. The inclusion of the two intermediate layers 8, 9 made e.g. of glass can significantly suppress the coupling to SPP modes and increase the outcoupling efficiency and the directionality.

Fig.2 shows a cross-sectional view of a layer structure 1 of another preferred embodiment of the present invention. The cross-sectional view is similar to the view of Fig. 1 whereby an additional top layer 11 spaces the director layer 4 from the collection medium 10. By adding an additional top layer between the director layer 4 and the collection medium 10 the outcoupling efficiency and the directionality of the device can be further improved by suppressing the role of SPP and by narrowing the emission pattern.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, and the description within the scope of the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### List of reference signs

- 1: layer structure
- 2: host medium
- 3: reflector layer
- 4: director layer
- 5: dipole emitter
- 8: first intermediate layer
- 9: second intermediate layer
- 10: collection medium
- 11: top layer

## Claims

1. Device for beaming of light, the device comprising a planar optical antenna structure, wherein the planar optical antenna structure comprises from top to bottom in the following order at least a collection medium (10) for collecting light from a director layer (4), a director layer (4) for obtaining directionality of the beamed light, a host medium (2), a reflector layer (3),
wherein a dipole light emitter (5) is positioned in the host medium (2) at a distance *d₁* away from the reflector layer (3),
wherein the director layer (4) is positioned in the radiation direction of the dipole light emitter (5),
wherein the director layer (4) is positioned at a distance *d₂* away from the dipole light emitter (5), **characterized in that**
between the reflector layer (3) and the host medium (2) a first intermediate layer (8) is provided and
between the host medium (2) and the director layer (4) a second intermediate layer (9) is provided.

2. Device according to claim 1, **characterized in that** *d₁* (6) is chosen within the range *λ*/(6*n*) ≤ *d₁* ≤ λ/(4*n*), where λ is the emission wavelength and *n* is the refractive index of host medium (2).

3. Device according to any previous claim, **characterized in that** the refractive indices of the first intermediate layer (8) and second intermediate layer (9) are both smaller than the refractive index of the host medium (2).

4. Device according to any previous claim, **characterized in that** between the director layer (4) and the collection medium (10) a top layer (11) is provided.

5. Device according to claim 4, **characterized in that** the refractive index of the top layer (11) is smaller than the refractive index of the collection medium (10).

6. Device according to any previous claim, **characterized in that** the thickness of the first intermediate layer (8) is chosen in the range from λ/(50*n*) to λ/(5*n*), where *n* is the effective refractive index of the first intermediate layer.

7. Device according to any previous claim, **characterized in that** the thickness of the second intermediate layer (9) is chosen in the range from λ/(15*n*) to λ/(4*n*), where *n* is the effective refractive index of the second intermediate layer.

8. Device according to any previous claim, **characterized in that** the thickness of the host medium (2) is chosen in the range λ/(50*n*) (corresponding to about 10 nm for *n* = 1.5 and λ = 738 nm) to λ/(4*n*) (corresponding to about 120 nm for *n* = 1.5 and λ = 738 nm), where *n* is the effective refractive index of the host layer.

9. Device according to any previous claim, **characterized in that** the host medium (2) is made from diamond or GaAs.

10. Device according to any previous claim, **characterized in that** at least one out of the reflector layer (3) or director layer (4) is made from aluminium, copper, silver, gold or a combination thereof.

11. Device according to any previous claim, **characterized in that** at least one out of the first intermediate layer (8) or the second intermediate layer (9) is made from silica, indium tin oxide or is an air gap.

12. Device according to any previous claim, **characterized in that** the top layer (11) is made from silica aerogel or is an air gap.

13. Device according to any previous claim, **characterized in that** the collection medium (10) is made from glass.

## Patentansprüche

1. Vorrichtung zum Abstrahlen von Licht, wobei die Vorrichtung die Struktur einer planaren optischen Antenne aufweist, wobei die Struktur einer planaren optischen Antenne in der folgenden Reihenfolge von oben nach unten mindestens ein Sammelmedium (10) zum Sammeln von Licht von einer Richtschicht (4), eine Richtschicht (4) zum Erhalten eines Richtfaktors für das abgestrahlte Licht, ein Wirtsmedium (2) und eine Reflektorschicht (3) aufweist,
wobei ein Dipol-Lichtemitter (5) im Wirtsmedium (2) in einem Abstand d₁ von der Reflektorschicht (3) angeordnet ist,
wobei die Richtschicht (4) in der Strahlungsrichtung des Dipol-Lichtemitters (5) angeordnet ist,
wobei die Richtschicht (4) in einem Abstand d₂ vom Dipol-Lichtemitter (5) angeordnet ist,
**dadurch gekennzeichnet, dass**
zwischen der Reflektorschicht (3) und dem Wirtsmedium (2) eine erste Zwischenschicht (8) angeordnet ist; und
zwischen dem Wirtsmedium (2) und der Richtschicht (4) eine zweite Zwischenschicht (9) angeordnet ist.

2. Vorrichtung nach Anspruch 1, **dadurch gekennzeichnet, dass** d₁ (6) im Bereich λ/(6n) ≤ d₁ ≤ λ/(4n) gewählt ist, wobei λ die Emissionswellenlänge und n den Brechungsindex des Wirtsmediums (2) bezeichnen.

3. Vorrichtung nach einem der vorhergehenden Ansprüche, **dadurch gekennzeichnet, dass** die Brechungsindizes der ersten Zwischenschicht (8) und der zweiten Zwischenschicht (9) beide kleiner sind als der Brechungsindex des Wirtsmediums (2).

4. Vorrichtung nach einem der vorhergehenden Ansprüche, **dadurch gekennzeichnet, dass** zwischen der Richtschicht (4) und dem Sammelmedium (10) eine Deckschicht (11) vorgesehen ist.

5. Vorrichtung nach Anspruch 4, **dadurch gekennzeichnet, dass** der Brechungsindex der Deckschicht (11) kleiner ist als der Brechungsindex des Sammelmediums (10).

6. Vorrichtung nach einem der vorhergehenden Ansprüche, **dadurch gekennzeichnet, dass** die Dicke der ersten Zwischenschicht (8) im Bereich von λ/(50n) bis *λ*/(*5*n) gewählt ist, wobei n der effektive Brechungsindex der ersten Zwischenschicht ist.

7. Vorrichtung nach einem der vorhergehenden Ansprüche, **dadurch gekennzeichnet, dass** die Dicke der zweiten Zwischenschicht (9) im Bereich von λ/(15n) bis λ/(4n) gewählt ist, wobei n der effektive Brechungsindex der zweiten Zwischenschicht ist.

8. Vorrichtung nach einem der vorhergehenden Ansprüche, **dadurch gekennzeichnet, dass** die Dicke des Wirtsmediums (2) im Bereich λ/(50n) (entsprechend etwa 10 nm für n = 1,5 und λ = 738 nm) bis *λ*/(4n) (entsprechend etwa 120 nm für n = 1,5 und λ = 738 nm) gewählt ist, wobei n der effektive Brechungsindex des Wirtsmediums ist.

9. Vorrichtung nach einem der vorhergehenden Ansprüche, **dadurch gekennzeichnet, dass** das Wirtsmedium (2) aus Diamant oder GaAs besteht.

10. Vorrichtung nach einem der vorhergehenden Ansprüche, **dadurch gekennzeichnet, dass** mindestens eine Schicht unter der Reflektorschicht (3) und der Richtschicht (4) aus Aluminium, Kupfer, Silber, Gold oder einer Kombination davon hergestellt ist.

11. Vorrichtung nach einem der vorhergehenden Ansprüche, **dadurch gekennzeichnet, dass** mindestens eine Schicht unter der ersten Zwischenschicht (8) und der zweiten Zwischenschicht (9) aus Siliziumdioxid oder Indiumzinnoxid hergestellt ist oder ein Luftspalt ist.

12. Vorrichtung nach einem der vorhergehenden Ansprüche, **dadurch gekennzeichnet, dass** die Deckschicht (11) aus Silica-Aerogel hergestellt ist oder ein Luftspalt ist.

13. Vorrichtung nach einem der vorhergehenden Ansprüche, **dadurch gekennzeichnet, dass** das Sammelmedium (10) aus Glas hergestellt ist.

## Revendications

1. Dispositif de formation de faisceau de lumière, le dispositif comprenant une structure d'antenne optique plane, où la structure d'antenne optique plane comprend, du haut vers le bas, dans l'ordre suivant, au moins un milieu de collecte (10) permettant de collecter de la lumière provenant d'une couche directrice (4), une couche directrice (4) permettant d'obtenir une directivité de la lumière en faisceau, un milieu hôte (2), une couche réfléchissante (3),
où un émetteur de lumière dipôle (5) est positionné dans le milieu hôte (2) à une distance *d₁* éloignée par rapport à la couche réfléchissante (3),
où la couche directrice (4) est positionnée dans la direction de rayonnement de l'émetteur de lumière dipôle (5),
où la couche directrice (4) est positionnée à une distance *d₂* éloignée par rapport à l'émetteur de lumière dipôle (5),
**caractérisé en ce**
**qu'**une première couche intermédiaire (8) est mise en place entre la couche réfléchissante (3) et le milieu hôte (2) et
**qu'**une deuxième couche intermédiaire (9) est mise en place entre le milieu hôte (2) et la couche directrice (4).

2. Dispositif selon la revendication 1, **caractérisé en ce que** *d₁* (6) est choisie dans la plage *λ*/(6*n*) ≤ *d₁* ≤ *λ*/(4*n*)*,* où λ est la longueur d'onde d'émission et *n* est l'indice de réfraction du milieu hôte (2).

3. Dispositif selon une quelconque revendication précédente, **caractérisé en ce que** les indices de réfraction de la première couche intermédiaire (8) et de la deuxième couche intermédiaire (9) sont tous deux plus petits que l'indice de réfraction du milieu hôte (2).

4. Dispositif selon une quelconque revendication précédente, **caractérisé en ce qu'**une couche de recouvrement (11) est mise en place entre la couche directrice (4) et le milieu de collecte (10).

5. Dispositif selon la revendication 4, **caractérisé en ce que** l'indice de réfraction de la couche de recouvrement (11) est plus petit que l'indice de réfraction du milieu de collecte (10).

6. Dispositif selon une quelconque revendication précédente, **caractérisé en ce que** l'épaisseur de la première couche intermédiaire (8) est choisie dans la plage de λ/(50*n*) à λ(/(5*n*), où *n* est l'indice de réfraction effectif de la première couche intermédiaire.

7. Dispositif selon une quelconque revendication précédente, **caractérisé en ce que** l'épaisseur de la deuxième couche intermédiaire (9) est choisie dans la plage de λ/(15*n*) à λ(/(4*n*), où *n* est l'indice de réfraction effectif de la deuxième couche intermédiaire.

8. Dispositif selon une quelconque revendication précédente, **caractérisé en ce que** l'épaisseur du milieu hôte (2) est choisie dans la plage de λ/(50*n*) (correspondant à environ 10 nm pour *n* = 1,5 et λ = 738 nm) à λ(/(4*n*) (correspondant à environ 120 nm pour *n* = 1,5 et λ =738 nm), où *n* est l'indice de réfraction effectif du milieu hôte.

9. Dispositif selon une quelconque revendication précédente, **caractérisé en ce que** le milieu hôte (2) est fabriqué à partir de diamant ou de GaAs.

10. Dispositif selon une quelconque revendication précédente, **caractérisé en ce qu'**au moins une couche parmi la couche réfléchissante (3) ou la couche directrice (4) est fabriquée en aluminium, cuivre, argent, or ou dans une combinaison de ceux-ci.

11. Dispositif selon une quelconque revendication précédente, **caractérisé en ce qu'**au moins une couche parmi la première couche intermédiaire (8) ou la deuxième couche intermédiaire (9) est fabriquée à base de silice, d'oxyde d'étain et d'indium, ou est un entrefer.

12. Dispositif selon une quelconque revendication précédente, **caractérisé en ce que** la couche de recouvrement (11) est fabriquée à base de silice ou est un entrefer.

13. Dispositif selon une quelconque revendication précédente, **caractérisé en ce que** le milieu de collecte (10) est fabriqué en verre.
